# EUROPEAN PATENT APPLICATION

(11) **EP 4 675 909 A1**
(43) Date of publication of application: **07.01.2026**
(21) Application number: 24186899.1
(22) Date of filing: 05.07.2024
(51) Int. Cl.: H02P 6/08, B25F 5/00

(54) **POWER LIMITATION ALGORITHM**

(71) Applicant: Black & Decker, Inc., New Britain, CT 06053 (US)
(72) Inventor: HEIMRICH, Tim, 65520 Bad Camberg (DE); SAHLI, Sami, 65510 Idstein (DE); HAUBER, Matthias, 60439 Frankfurt am Main (DE)
(74) Representative: SBD IPAdmin

(57) **Abstract**

There is provided method for controlling an electric motor configured to drive a mechanical load, the method being for use in a power tool and comprising: in response to a condition being satisfied, comparing speed of the motor to a speed threshold; and if the motor speed is below the speed threshold, activating a power limitation mode. The power limitation mode comprises: monitoring motor power; adjusting one or more motor control parameters so as to maintain power at or close to a power limit; and in response to a determination that the motor speed exceeds the speed threshold, deactivating the power limitation mode and activating an operating mode in which a reference motor speed for the motor is set to an operating speed.

## Description

### TECHNICAL FIELD

The present disclosure relates to control methods for an electric motor. In particular, the present disclosure relates to battery powered power tools driving a reciprocating or oscillating load, such as compacting power tools (e.g. plate compactors).

### BACKGROUND

Power tools can include an electric motor arranged to drive a load. Typically the motor will drive a rotating, reciprocating or oscillating load. For example, power tools with a reciprocating or oscillating drive mechanism are often used to perform compacting tasks such as compacting soil, asphalt or hardcore, or hammering tasks such as breaking up concrete (e.g. a jack hammer). An example of a compacting power tool is a plate compactor which comprises a reciprocating plate or foot which impacts and flattens the surface to be compacted. A plate compactor may also be known as a soil compactor, a compactor or a vibratory plate. Plate compactors generally comprise a combustion engine or electric motor for driving the reciprocating plate or foot.

It is common for power tools, such as plate compactors, to be left outside on job sites overnight exposed to the environment. The colder temperatures overnight, for example in the range -15°C to 5°C, can lead to an increase in the viscosity of lubricants (e.g. bearing grease, transmission fluid, etc.) in the moving parts of the power tool, leading to increased resistance on starting up the power tool in the morning. There may also be other materials that in cold conditions cause an increase in load, such as mud or ice/snow caked around the moving parts of the power tool. This increased load on the motor can cause issues for the battery which itself may be cold and hence limited in its ability to provide a high current.

When the user attempts to start up a cold power tool in the morning, the power demands of the power tool will typically be greater in order to generate sufficient torque to bring the power tool up to operating speed. This occurs at a point in time when the battery itself is typically also cold and therefore less capable of satisfying the increased power demand of the power tool. In some cases, the battery may be incapable of providing the necessary power and the power tool cannot be used or may only be used in limited power modes (e.g. at low speed). Some tools may enter a safety shut-off mode in order to protect the battery and/or electric motor when it is determined that the battery cannot provide the necessary power to perform the start-up process of the power tool.

### SUMMARY

In a first aspect there is provided a method for controlling an electric motor configured to drive a mechanical load, the method being for use in a power tool and comprising: in response to a condition being satisfied, comparing speed of the motor to a speed threshold; and if the motor speed is below the speed threshold, activating a power limitation mode comprising: monitoring motor power; adjusting one or more motor control parameters so as to maintain power at or close to a power limit; and in response to a determination that the motor speed exceeds the speed threshold, deactivating the power limitation mode and activating an operating mode in which a reference motor speed for the motor is set to an operating speed.

The first aspect may be adapted according to any teaching herein, including but not limited to any one or more of the following options.

The electric motor may be configured to drive the mechanical load in a reciprocating or oscillating cycle.

The power tool may be a plate compactor.

The operating speed may be a steady state speed of the power tool.

The condition may be one or more of: a predetermined period of time elapsing since activation of the motor; a motor power reaching a power threshold; or a motor current reaching a current threshold.

The predetermined period of time may be in the range of 2 to 6 seconds.

The motor power reaching the power threshold may be one or more of: a power drawn from a power source; a power provided to the motor; or a mechanical power generated by the motor.

The motor current reaching the current threshold may be one or more of: a current drawn from a power source; a current provided to the motor.

The method may further comprise, prior to testing the condition, activating the electric motor in a startup mode.

The method may further comprise setting the reference motor speed according to a predetermined startup procedure upon activation of the startup mode.

The speed threshold may be in the range of 50% to 80% of the operating speed.

The speed threshold may be about 65% of the operating speed.

The method may further comprise setting the reference motor speed to the motor speed upon activation of the power limitation mode.

The adjusting one or more motor control parameters so as to maintain power at or close to a power limit may comprise decreasing the reference motor speed by a predetermined speed step if the monitored motor power exceeds the power limit.

The adjusting one or more motor control parameters so as to maintain power at or close to a power limit may comprise increasing the reference motor speed by a predetermined speed step if the monitored motor power is below the power limit.

The adjusting one or more motor control parameters so as to maintain power at or close to a power limit may comprise maintaining the reference motor speed if the monitored motor power is at the power limit.

The motor control parameters may comprise one or more of: a voltage provided to the motor, a current provided to the motor, a frequency of the motor.

The adjusting one or more motor control parameters so as to maintain power at or close to a power limit may comprise decreasing the reference motor speed by a predetermined speed step if the monitored motor power exceeds the power limit by a hysteresis value.

The adjusting one or more motor control parameters so as to maintain power at or close to a power limit may comprise increasing the reference motor speed by a predetermined speed step if the monitored motor power is below the power limit by a hysteresis value.

The hysteresis value may be in the range of 2% to 4% of the power limit.

The hysteresis value may be 3% of the power limit.

The variation of the one or more motor control parameters may cause the motor speed to match the reference speed.

A speed controller may be used to control the motor speed. The speed controller may be a proportional integral controller.

The power limit may be a constant value.

The method may further comprise, if the power limitation mode is active for longer than a predetermined timeout period, deactivating the power limitation mode.

The method may further comprise, if the power limitation mode is active for longer than the predetermined timeout period, powering down the power tool.

The motor power may be a measure of instantaneous or averaged electrical input power to the motor.

The motor power may be calculated using a voltage and a current determined in a d-q reference frame.

The electric motor may use an FOC commutation scheme.

In a second aspect there is provided a power tool comprising: an electric motor configured to drive a mechanical load; and control logic configured to: in response to a condition being satisfied, compare speed of the motor to a speed threshold; and if the motor speed is below the speed threshold, activate a power limitation mode in which the control logic is configured to: monitor motor power; adjust one or more motor control parameters so as to maintain power at or close to a power limit; and in response to a determination that the motor speed exceeds the speed threshold, deactivate the power limitation mode and activate an operating mode in which a reference motor speed for the motor is set to an operating speed.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a plate compactor which may be configured in accordance with the principles described herein.
Figure 2a shows a rear view of a plate compactor.
Figure 2b shows a side view of a plate compactor.
Figure 2c shows a rear perspective view of a plate compactor.
Figure 3 shows a drive mechanism and motor control apparatus in accordance with the examples described herein.
Figure 4 shows a graph of the input power to the motor against time, under the conditions of increased load with no power limitation algorithm being activated.
Figure 5 shows a graph of the input power to the motor and speed of the motor against time, under the conditions of increased load with the power limitation algorithm being activated.
Figure 6 shows an exemplary diagram detailing the flow of data between the power calculation unit and power limitation unit.
Figure 7 shows a graph where the predefined power limit has an associated hysteresis region.
Figure 8 shows a flowchart describing how the method may be performed in one example.
Figure 9 shows an exemplary configuration of control logic for performing the power limitation algorithm described herein, where an FOC commutation scheme has been used.

The accompanying drawings illustrate various examples. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

The present disclosure describes a plate compactor by way of example. More generally the power tool may be any kind of power tool comprising an electric motor arranged to drive a load, for example, an electric trowel, a reversible plate compactor, a concrete saw, an electric breaker, etc. In particular, the power tool may comprise an electric motor that may be arranged to drive a reciprocating or oscillating load, such as is the case with plate compactors, jack hammers, rammers, and the like. The startup methods described herein may be used to limit motor power in response to any condition leading to increased load - particularly during start up. For instance, an increase in load may be due to cold conditions causing increased resistance to movement of the moving parts driven by the motor. More generally, there could be any reason for an increase in load above a typical operating load - for example, rust or other corrosion of moving parts, environmental contamination of the lubricants of the power tool, materials adhered to the moving parts of the power tool (e.g. mud), physical damage to the power tool, wear and tear (e.g. worn out bearings), misuse by the operator, etc.

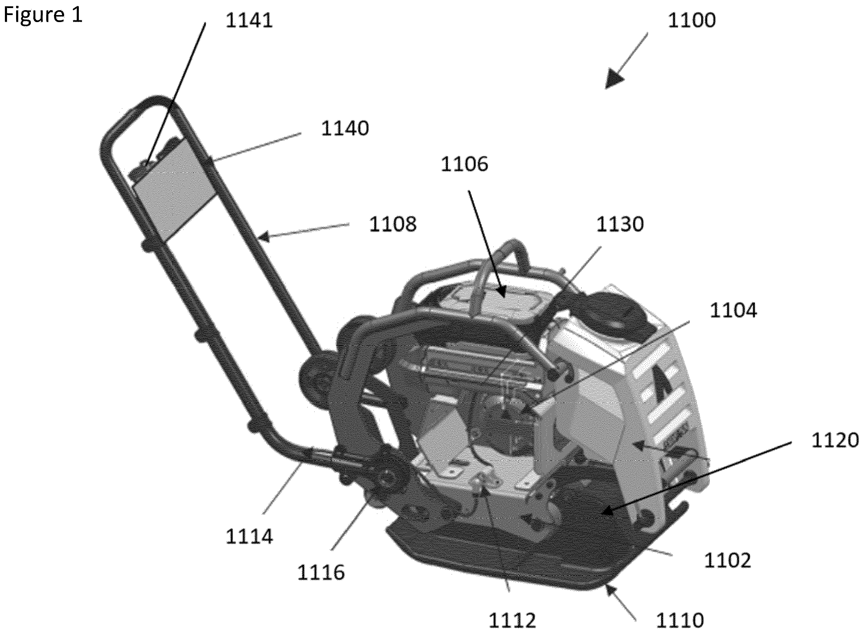

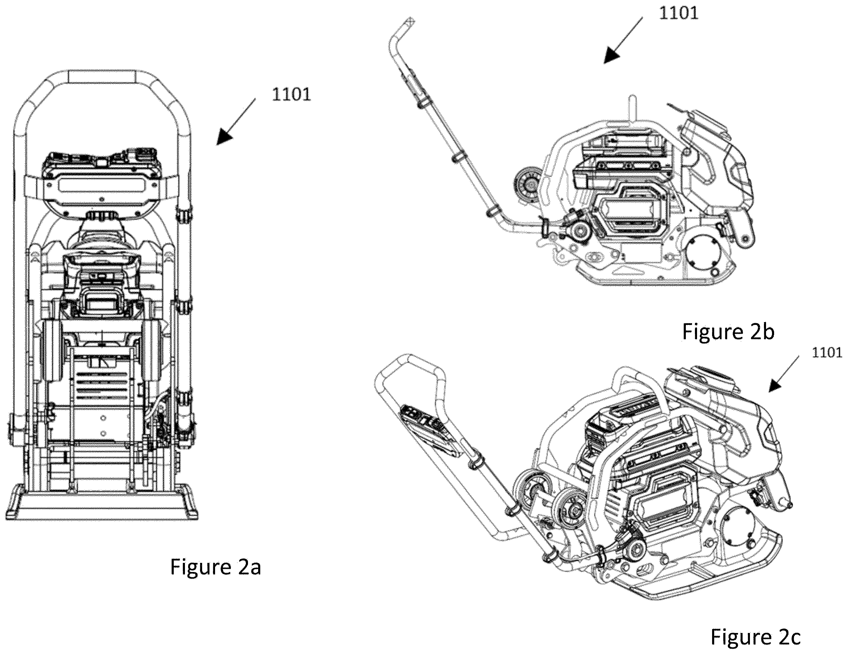

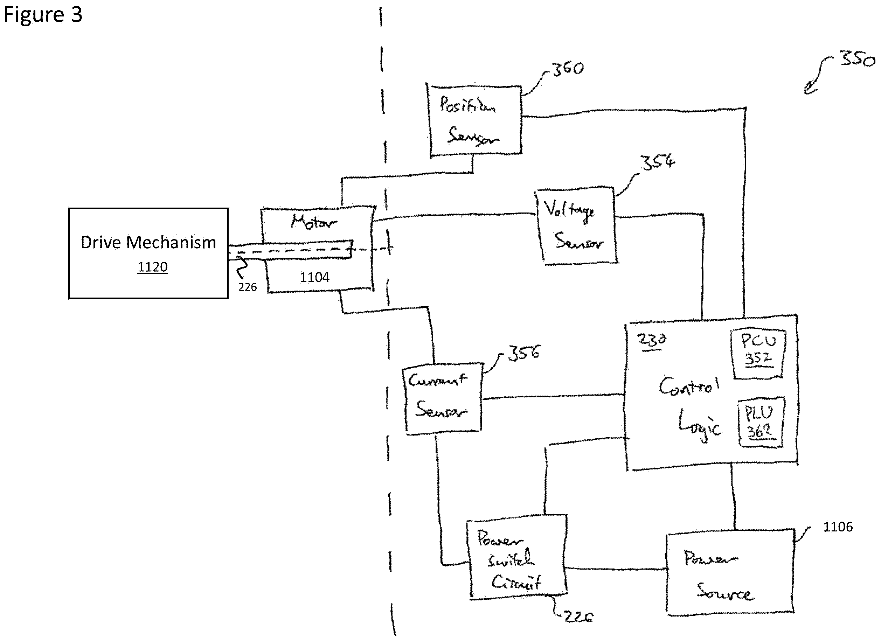

Figure 1 shows a plate compactor 1100 which may be configured in accordance with the principles herein. The plate compactor 1101 is shown in a rear view (Figure 2a), side view (Figure 2b), and rear perspective view (Figure 2c). Plate compactor 1100 includes a main body 1102 and a vibrating plate portion (or plate) 1110. Compacting plate 1110 may be adapted for compacting soil, gravel, sand, silt or any other material to be compacted. The plate compactor also comprises a handle 1108 by which a user can manoeuvre the compactor, an electric motor 1104, and a battery pack 1106 for powering the compactor. The electric motor 1104 is configured to drive a vibration generation mechanism 1120, such as an exciter with an eccentric mass, that is rigidly coupled to compacting plate 1110. The vibration generation mechanism causes the plate 1110 to move in a reciprocating manner. The vibration generation mechanism represents a drive mechanism, as shown in Figure 3. The electric motor 1104 may be connected to the vibration generation mechanism via an intermediate drive mechanism (such as a belt, chain, gearbox, etc). The vibration generation mechanism may be rotatably coupled to a drive shaft 226 of an electric motor 1104.

The compactor shown in Figure 1 may comprise an input unit 1140, an electric motor 1104, a power supply 1106, a handle 1108, and a control module 1130. In some examples, motor 1104 is received in a motor housing of the main body 1102. Motor 1104 may be any type of motor and powered by an appropriate power source 1106 (e.g., a battery).

In some examples, compactor 1100 further includes a user operable switch 1141 (also referred to as a trigger or power switch) and a control module 1130. Control module 1130 may include the motor control apparatus 350 (shown in Figure 3 and described in more detail below) which controls the supply of power from the power supply 1106 to motor 1104. The control module 1130 may be disposed within the housing of the main body of the compactor 1100. Depending on the power tool shape and specifications, control module 1130 may be disposed at any location within or on the compactor.

Control module 1130 may also comprise components to support an input unit 1140 for receiving user function selections, such as an ON/OFF signal, variable-speed signal, and forward-reverse signal.

In the example shown in Figure 1, the control module 1130 and motor 1104 are located on the main body 1102, whereas the input unit 1140 may be located on the handle 1108 of the compactor 1100. Between the main body 1130 and input unit 1140 there may be provided an interface 1112 for coupling and decoupling the input unit to the main body. The interface 1112 may be accessible to a user and may be coupled or decoupled manually by the user. This can advantageously permit disassembly and re-assembly of the plate compactor, e.g. to enable servicing and/or replacement of parts in the event of damage, malfunction or wear.

There may be provided an input unit 1140 for providing inputs to the compactor 1100. The input unit provides one or more input controls to enable a user in order to control operation of the compactor 1100. In some examples, input unit 1140 may include one or more of a user operable ON/OFF power switch, a variable-speed switch, and a speed dial for selecting a speed of the motor. Based on the input signals from input unit 1140, the control module 1130 may be configured to modulate and regulate the supply of power to motor 1104.

A power source is provided to power the compactor 1100. In some examples, the power supply 1106 may be a battery, for example a replaceable battery pack. In order to drive the electric motor 1104, the control module 1130 may comprise motor control apparatus 350 configured to control a power switch circuit 226 arranged to provide electric power from the power supply 1106 to the electric motor 1104. In some examples, the plate compactor 1100 may be configured in accordance with an embodiment of the plate compactor found in US provisional application number US 63/578,008, filed August 22, 2023, titled "A Power Tool with Detachable Input Unit," which is incorporated herein by reference in its entirety.

The plate compactor 1100 may include one or more of: a tool housing 1102; a plate 1110 movably coupled to the tool housing; a vibrating drive mechanism 1120 configured to drive the plate in a vibrating manner so as to compact a surface; an electric motor 1104 configured to drive the vibrating mechanism; and a battery pack 1106 configured to provide electrical power to the electric motor. Any suitable mechanical arrangement may be employed at the vibrating drive mechanism 1120 to convert the rotational movement of the motor 1104 into a vibrational movement for driving the plate 1110.

The battery pack 1106 may comprise a battery pack housing, a cell holder subassembly received in the battery pack housing, and a plurality of battery cells received in the cell holder subassembly. Typically, the battery pack, when fully charged, may have a stored energy of at least 1900 kJ and a ratio of stored energy to a volume of the cell holder subassembly of at least 800 kJ/L. Typically, the compactor tool may have a runtime of at least 0.6 seconds per kJ of battery pack energy over a discharge cycle of the battery pack from a full state of charge to when the battery pack reaches a cutoff threshold.

Power tools are typically designed with an expectation of the mechanical load on the motor and electrical load on the battery during start-up and steady state operation. However, in certain circumstances, the actual load on the motor and/or battery can be significantly higher. This can be a particular issue during startup when the load on the motor and/or battery is in any case often expected to be at its highest - e.g. the power required to start-up a plate compactor and get the heavy power tool up to its steady state speed typically exceeds the power required to maintain the plate compactor at its steady state speed. Additional loads on the power tool during start-up can lead to very high power demands from the battery and/or currents through the motor windings, or even prevent the tool from successfully starting up.

For example, during start-up of an electric plate compactor with an electric motor the environmental temperature of the plate compactor may influence the power demands of the tool from its power source. If the plate compactor experiences a decrease in temperature (e.g. as a result of being left outside overnight on a worksite), then the viscosity of its lubricants may increase, increasing the load on the motor during start up.

A greater torque is required from the motor during periods of additional load (e.g. due to cold lubricant). Since current increases with torque, providing a greater torque requires the power source (e.g. battery) to provide greater power. In some situations, the power demand from the power source may exceed the ability of the power source to provide the required power, especially if the battery is also cold and thus limited in its ability to provide a high current. The increased power demand could damage the battery, and/or excessive current may damage the motor and/or other components in the system (e.g. circuitry). The increased demand also causes excessive discharge and so reduces the runtime of the battery. Typically, a power tool will be configured to shut down if its startup process cannot be completed, so as to protect the components in the system.

More generally, power tools may experience additional load at any point during operation which could lead to excessive power demands from the battery and/or excessive current through the motor windings, potentially leading to safety cut-off of the power tool. High power usage by a motor may lead to high internal temperatures at the battery and/or motor (e.g. due to heating of the motor coils). To avoid thermal damage, power tools may employ an I²T protection algorithm which, when triggered, causes safety cut-off of the power tool (e.g. the tool is powered down and is prevented from starting up again until one or more temperatures measured at the power tool are below a predefined threshold and/or a predetermined time has elapsed).The principles described herein for managing periods of additional load may be applied at any time to the operation of a power tool (e.g. during startup and/or during steady state operation) in order to avoid damage to the power tool and/or avoid operating conditions that may lead to safety cut-off of the power tool. In the examples described herein with respect to the figures, power limitation methods are described in relation to the startup of a power tool but it will be understood that the power limitation methods described may be applied at any point during the operation of a power tool - e.g. during steady state operation.

Control methods are provided that enable a power tool to handle periods of additional load which might otherwise lead to damage and/or cut-off of the power tool. In particular, control methods are provided that enable power tools to safely complete startup in the presence of additional loads. This can help power tools to achieve their operating speed without risking damage to the battery and/or motor. The control methods described herein relate in particular to brushless motors for power tools, such as brushless direct current (BLDC) motors and induction motors, in which the motor is coupled (which may be via an optional transmission, e.g. a reduction gear) to its load. Typically, brushless motors have three phases, but different numbers of phases may be used (e.g. 6 phases).

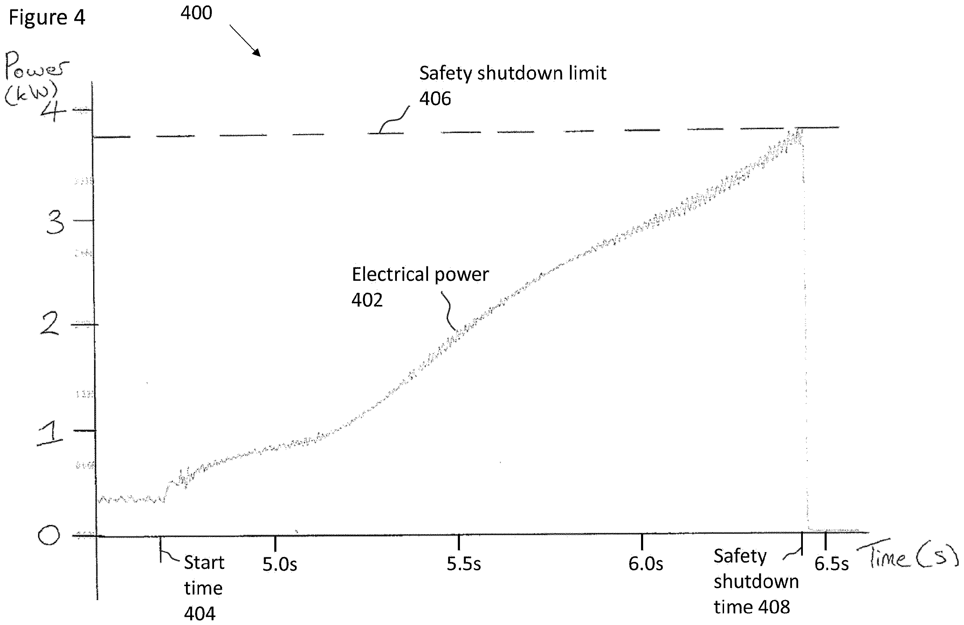

Figure 4 illustrates in more detail an example of the problematic behaviour during startup of an electric plate compactor at cold temperatures. Figure 4 is a plot 400 of the electrical power 402 drawn from the power source for an electric motor against time when the cold temperatures impose an additional load on the motor. After the motor is switched on at the start time 404, the motor speed is increased towards the operating speed of the motor. In order to provide the increased torque necessary to increase the speed up to the operating speed, the current required from the power source increases. As the power 402 reaches the safety shutdown limit 406, it can be observed that the power is still steadily increasing, indicating that a significantly higher power than the safety shutdown limit would be required in order for the motor to achieve the desired speed.

I²T protection operating at the power tool imposes a safety shutdown limit on the electrical power 406 drawn from the battery. The level of the limit may be determined as is known in the art so as to protect the components of the power tool against the effects of excess current over a sustained duration. When the power 402 reaches the safety shutdown limit 406 at a shutdown time 408, the power tool is configured to shutdown to prevent damage to its components.

The present disclosure provides a power limitation algorithm for controlling an electric motor of a power tool so as to avoid excessive power draw during periods of additional load, and in particular during periods of additional load during startup of the power tool.

### Motor control apparatus

Motor control apparatus 350 for controlling the motor 1104 according to a power limitation algorithm taught herein is shown on the right-hand side of Figure 3. Typically for power tools, the motor will be a brushless motor which requires an electronic controller (e.g. control logic 230) to control one or more motor control parameters. The motor control parameters may include, for example, the voltage provided to the motor, the current provided to the motor, the frequency of an alternating current provided to the motor, and/or the phase of an alternating current provided to the motor. The control logic may control currents through the motor windings (typically the stator) so as to produce magnetic fields which drive the rotor (typically a permanent magnet) to rotate. By adjusting the phase and amplitude of the current pulses, the speed and torque provided by the motor may be controlled. In this manner, the control logic 230 is configured to perform commutation: that is, the control logic controls the switches of the power switch circuit 226 to switch the currents to the motor windings so as to cause the magnetic fields to rotate based on the position of the rotor. The control logic adapts the magnetic fields so as to effect a force on the rotor in the desired rotational sense - e.g. to accelerate or decelerate the motor, or to maintain a constant rotational speed for the load being driven by the motor. In some examples, the motor is a Brushless DC Electric (BLDC) motor.

In some examples, motor 1104 may be an outer-rotor motor (or external rotor motor). In an outer-rotor motor, the rotor magnets are provided on an outer cup that is rotatable around a stator core. The outer cup includes a plate on one side of the stator that is secured to a rotor shaft. An outer rotor is capable of providing higher magnetic flux and is also capable of producing more torque than a comparable inner rotor motor.

For motors other than BLDC motors, the control logic 230 may be configured to perform commutation according to the requirements of that motor system, as will be understood by those skilled in the art of electric motor control.

The control logic may be any suitable control unit: for example, it may comprise one or more of fixed logic hardware (e.g. an Application Specific Integrated Circuit, or ASIC), firmware, and software running on a processor.

In order for the control logic 230 to cause appropriate currents to be applied to the motor windings, the control logic must know the orientation of the motor's rotor relative to its stator coils. This may be achieved through the use of a position sensor 360 (which would typically be provided at the motor 1104, e.g. as a Hall Effect sensor or rotary encoder) and/or the control logic may infer the position of the rotor by measuring the phase and/or amplitude of the voltage and/or currents induced in the motor coils - for example, by measuring the back EMF of the undriven coils of the motor as is known in the art, or through the use of Field-Oriented Control (FOC) algorithms.

In some examples, the control logic 230 may be configured to monitor one or more of electrical power input, mechanical power output, mechanical torque, and phase current envelope. Such parameters may be monitored through the use of suitable sensors provided at the power tool. For example, mechanical power and/or torque may be measured by appropriate sensors (e.g. a rotational torque sensor comprising a strain gauge) on an output shaft of the electrical motor; and electrical power input may be measured by providing appropriate circuitry (e.g. to calculate electrical power based on the phase currents provided to the motor by the control logic). A phase current envelope may be determined by the control logic in any suitable manner - for example, by applying an envelope function to the oscillating phase currents so as to establish a curve describing a variation in the amplitude of a combination of the phase currents.

To enable the control logic 230 to control the operation of the motor 1104, the motor control apparatus 350 further includes a current sensor 356 to measure the phase currents through the motor windings. Typically the motor will have three stator windings with the current through each winding representing one of three phase currents, but in some examples a larger or smaller number of windings (and hence phase currents) may be provided. The motor control apparatus may further include a voltage sensor 354 for measuring the voltages applied across the motor windings.

The current sensor 356 may perform the measurement of the phase currents in any suitable manner. For example, to measure the phase currents of the stator, the current sensor may include a set of shunt resistors (or other components having a known resistance) provided on the current paths of each of the motor phase windings. The current sensor 356 may be configured to measure the voltages across each of the shunt resistors from which the control logic 230 may calculate the current passing through corresponding phases of the motor using the known shunt resistances (i.e. from the simple relationship *I* = *V*/*R*)*.* In some examples, the current sensor 356 may calculate the phase currents so as to provide the phase currents to the control logic 230 (rather than providing the voltage across each shunt resistor for the control logic to calculate the corresponding phase currents). Various other current measurement techniques are known in the art which may be used.

Note that only two of the phase currents (e.g. IU and IV) need to be measured since the third phase current (e.g. IW) may be calculated using Kirchhoff's current law, IU+IV+IW = 0. It can however be advantageous to measure all three phase currents and rely on Kirchhoff's current law as means of redundant current measurement to ensure against circuit component failure.

In examples in which the control logic monitors a drive current, any suitable technique may be used to determine that current. Once the phase currents are known, currents may be calculated in other reference frames. For example, current *I_{q}* which is the quadrature component of the stator currents in a rotating reference frame that is synchronous with the rotor flux, and current *I_{d}* which is the in-phase component of the stator currents in a rotating reference frame that is synchronous with the rotor flux, may be calculated from the phase currents (see below for details of the calculation).

In some examples using FOC, it is further advantageous for the control logic to act so as to minimise the in-phase current *I_{d}* (e.g. for the control logic to attempt to maintain *I_{d}* = 0). This minimises the reluctance torque and maximises the torque due to the Lorentz force due to the quadrature current *I_{q}*.

A power source 1106 is provided to power the motor 1104 and its control apparatus 350. The power source may be a battery - e.g. a replaceable battery pack for a portable plate compactor or other power tool. In order to drive the motor, the control logic 230 is configured to control a power switch circuit 226 which provides voltage and current from the power source 1106 to the motor 1104 under the control of the control logic 230.

The control apparatus 350 also comprises a power calculation unit (PCU) 352, which may be provided as part of control logic 230. Power calculation unit 352 may calculate the input power from the power source 1106 by using the voltage measured by the voltage sensor 354 and the current measured by the current sensor 356. The exact power calculation used to calculate the active power may differ according to the commutation scheme being employed by the system. For example, in block commutation (i.e. trapezoidal 6-step control) the active power may be calculated via the product of the battery voltage *V_{S}* and the battery current *I_{S}*. In another example, in FOC, these parameters are not available, and instead the active power is calculated based on the direct (d) and quadrature (q) vector components of the voltage and current. Further explanation of the (d, q) reference frame in relation to FOC is provided later in more detail.

The control apparatus 350 also comprises a power limitation unit (PLU) 362. The power limitation unit 362 may be provided within the control logic 230. The power limitation unit 362 is used to limit the power consumption of the motor according to a power limitation algorithm as discussed herein.

The control apparatus 350 may comprise a speed controller configured to maintain the motor speed at a reference speed. A preferred speed controller may be a Proportional Integral (PI) controller, although a speed controller configured to use any suitable control algorithm may be used, e.g. a Proportional Integral Derivative (PID) algorithm. Details of how a PI controller may operate in the algorithm discussed herein is provided in the context of a FOC commutation scheme later in this document. However, it will be appreciated that a speed controller may be used in combination with any other commutation scheme. The speed controller may be configured to control the motor speed so as to match the actual (measured) motor speed to a reference (target) speed. This may be achieved through the speed controller varying one or more motor control parameters (e.g. voltage, current, frequency, phase of the currents applied to the motor windings in any suitable reference frame) so as to control the speed of the motor.

In an example where an FOC commutation scheme is used, the speed controller may output motor control parameters in the (d, q) reference frame. The control apparatus may be configured to transform the motor control parameters in the (d, q) reference frame into the stator reference frame of the motor. Any suitable algorithm for driving the motor according to the motor control parameters may be used at the control apparatus, for example a Pulse Width Modulation (PWM) technique such as a Space Vector Pulse Width Modulation (SVPWM) algorithm.

### Power limitation algorithm

Examples of the power limitation algorithm will now be described with respect to the figures.

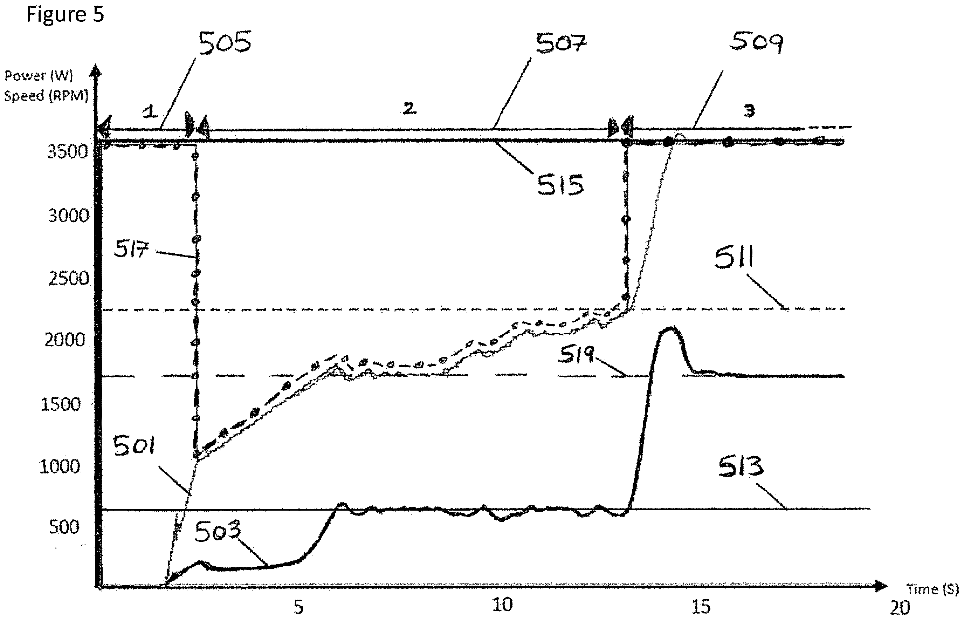

Figure 5 illustrates the operation of a motor controlled by the control logic 230 when a power limitation algorithm is active. In the example shown, the algorithm is triggered during startup of a plate compactor. In Figure 5, the operation of the motor is controlled according to a Field-Oriented Control (FOC) control mechanism, but in general the commutation control mechanism performed by the control logic 230 may be any suitable mechanism - for example, trapezoidal 6-step control or a V/Hz (also termed direct drive or V/F law) control scheme.

In Figure 5, line 501 is a plot of the motor speed and line 503 is a corresponding plot of the active input electrical power supplied to the motor. In the present example, the motor 1104 is a Brushless DC Electric (BLDC) motor and the drive current is a current *I_{q}*, the quadrature component of the stator currents in a rotating reference frame that is synchronous with the rotor flux (as is explained below in further detail). The current *I*_{q} is proportional to the torque produced by the motor and is not measured directly by the current sensor 356 but can be calculated by the control logic 230 from the phase currents measured by the current sensor 356.

In general, the drive current may be any suitable current or a combination of one or more currents provided to or measured at the motor. In some examples, the drive current may be a combination of one or more of the set of phase currents (e.g. an envelope describing a variation in the amplitude of a combination of one or more phase currents) applied to the stator windings (or rotor windings in the case of a motor having rotor windings) in any suitable reference frame. For example, the drive current may be an envelope (e.g. a curve or function derived from the phase currents) describing the amplitude of the phase currents over time.

The drive current may be determined in any suitable manner. For example, the quadrature current *I*_{q} may be determined by measuring the phase currents through the stator windings of the motor and transforming those currents into the quadrature current *I*_{q} through the application of the Clarke and Park transformations, as is described in further detail below. The speed of the motor is proportional to the voltage applied, and torque is proportional to the current being drawn by the motor, thus electrical power is proportional to both torque and speed.

The power limitation algorithm operates to prevent the power drawn by the motor from reaching potentially damaging levels whilst giving time for the moving parts to overcome the increased resistance. This enables the power tool to safely reach its operating speed even in situations where the tool encounters increased load during startup. In the power limitation algorithm, the power is held at a power limit, which will often allow the additional resistance to be overcome as the motor operates. For example, the viscosity of lubricating fluids may reduce due to the movement of the lubricating fluid and/or the heating of the lubricant due to its movement and/or heating of the battery and/or electrical components, such as the motor and/or its power circuitry. Material clinging to the moving parts of the tool may also be broken up/shaken off (e.g. mud/ice). The dynamic friction within the moving parts may be lower than the static friction, thus the resistance from friction may decrease as the moving parts warm up. Furthermore, rust or corrosion which may bind parts of the apparatus together and result in greater resistance may be rubbed away due to movement of the moving parts.

The control logic 230 may be operable in three modes: a startup mode 505, a power limitation mode 507 according to the principles described herein, and an operating mode 509. In startup mode 505, is the motor is initialised and the control logic operates to bring the motor speed up to its operating speed 515. In the operating mode 509, the power tool is operating in a 'steady state' at a preferred operating motor speed 515, shown on Figure 5 as a bold line. Under normal conditions, the power tool transitions directly from the startup mode 505 to the operating mode 509 as the motor speed 501 is successfully ramped up to the motor operating speed 515. The operation of the power limitation mode 507 disclosed herein is described in more detail below. In the present example, the power limitation algorithm is activated in the startup mode but the control logic may be configured to additionally or alternatively activate the power limitation mode from the operating mode, e.g. when the power tool is operating in its steady state and an additional load is encountered by the motor.

The startup mode may be activated when the power tool is activated - in the example of Figure 5 this is at t = 0. Before this time, the power tool is off. The purpose of the startup mode is to start the motor and increase its speed up to an operating speed of the power tool. In the startup mode, the control logic is configured to perform a startup procedure. Typically the startup procedure determines how the reference motor speed 517 of the motor should vary according to one or more parameters of the motor, such as its actual speed, current, time in the startup mode, etc. The reference speed 517 is the speed at which the control logic 230 attempts to operate the motor and is shown on Figure 5 as a dashed-and-dotted line.

In some examples, a startup procedure controls the acceleration of the motor based on one or more parameters. For example, a startup procedure may be a predetermined speed ramp that the control logic 230 attempts to follow.

During a startup procedure, it may be necessary to perform Initial Position Detection (IPD) of the rotor of the motor - for example, in the case that the motor is sensor-less. Sensor-less motors may not include a rotor position sensor (e.g. position sensor 360) to indicate the orientation of the rotor to the motor control logic adapted to perform commutation of the motor.

For the purpose of this example, a simple startup procedure is used, wherein the motor reference speed 517 for the motor is initially set to the steady state motor operating speed 515 at t = 0. The motor reference speed 517 is the target speed at which the control logic attempts to operate the motor. More generally, any suitable startup procedure may be used. The operating motor speed is a steady state speed at which the motor of the power tool is to operate, i.e. in its operating mode. The operating motor speed may also be known as the steady state (motor) speed.

In some examples, the power tool may have more than one operating motor speed. For example, the operating motor speed may be selected by a user from a plurality of speeds appropriate to the power tool, e.g. plate compactor. For example, a suitable control switch may be provided at a plate compactor to enable a user to select between a low steady state speed of 3200 rpm (for example) and a high steady-state speed of 3600 rpm (for example). The values provided are merely examples and motor speeds for other power tools may vary dependent on the size of the tool, the power capacity of the battery of the power tool and the type of power tool itself. It will be appreciated that other speeds may also be chosen.

As previously noted with respect to Figure 4, when the motor attempts to reach an operating motor speed quickly with an increased load (e.g. due to cold operating conditions or other reasons), the motor and/or battery may overload as too much power is drawn from the battery in order to increase the speed to its predetermined motor operating speed.

The control logic may be configured to activate the power limitation mode when one or more conditions are met. The conditions, which may be predetermined, may be, for example, one or more of a motor speed, a measure of electrical power and/or current drawn from the power source, a measure of electrical power and/or current provided to the motor, a measure of mechanical power generated by the motor, a period of time.

For example, the control logic may be configured to monitor the electrical power drawn from the power source. The control logic may further be configured to monitor a period of time. In determination that the electrical power drawn from the power source has reached a predetermined threshold, and that the period of time reaches a predetermined period of time, the control logic may activate the power limitation mode. A high electrical power usage may indicate that the electric motor is experiencing a torque that is greater than would be expected under normal operating conditions. The control logic may require multiple conditions to be satisfied before activating the power limitation mode. For example, the control logic may require that the motor speed is below a threshold and that the motor current exceeds a current threshold.

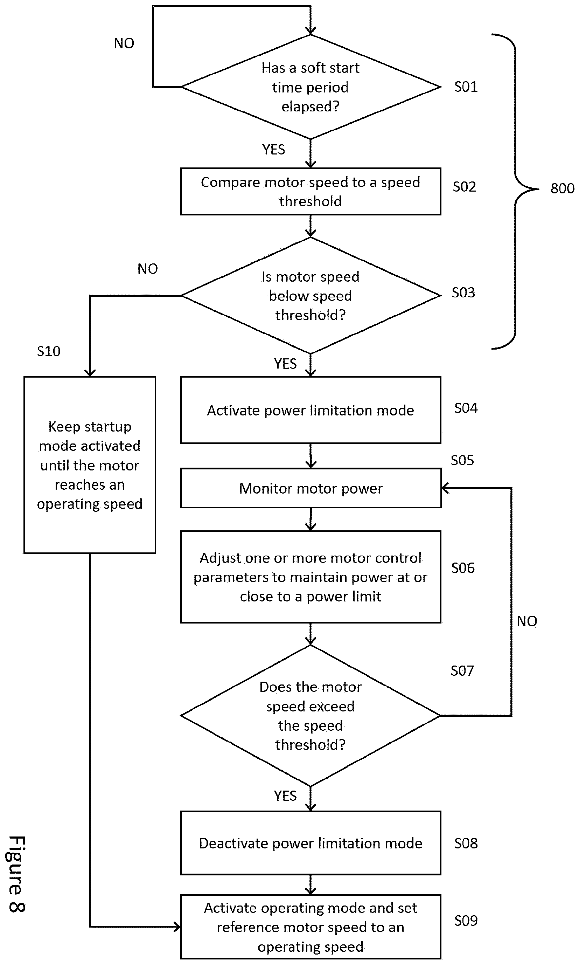

In the present example, the control logic may be configured to monitor a period of time elapsed since activating the motor. In the example, a condition to be met is the period of time since activating the motor exceeding a 'soft start' time period, corresponding to method step S01 of Figure 8.. The control logic may also be configured to monitor the actual motor speed 501 during startup and be configured to test the motor speed 501 against a speed threshold 511, corresponding to method step S02 of Figure 8. The motor speed being determined to be below the speed threshold is another example of a condition that must be met for the power limitation mode to be activated. The determination of whether this condition is satisfied is shown as step S03 in Figure 8.

The speed threshold may be a predetermined minimum speed. The speed threshold 511 may be expressed as an absolute value (e.g. 2300rpm) or a relative value (e.g. 65% of the steady-state operating speed of the power tool), and is shown on Figure 5 as a short-dashed line. The speed threshold 511 may be any suitable value, for example, the speed threshold 511 may be substantially in the range of 50% to 80% of the operating motor speed, preferably 60 to 70%, more preferably 65%. This range is chosen as it increases the likelihood of the motor power 503 being in the range of substantially +/- 20% of the nominal power 519 once the power tool deactivates the power limitation mode, where the nominal power 519 is the expected operating power of the tool when operating at its steady state and is shown on Figure 5 as a long-dashed line.

The nominal power 519 will typically be dependent on the type of power tool being used. For example, the nominal power of a plate compactor may be around 2 kW.

It will be appreciated that in other examples, steps S01 to S03 may instead comprise one or more steps arranged to test one or more conditions 800 (whether during motor startup or otherwise) in order to determine whether the power limitation mode should be entered. For example, one or more conditions may comprise one or more of a motor speed, a measure of electrical power and/or current drawn from the power source, a measure of electrical power and/or current provided to the motor, a measure of mechanical power generated by the motor, a period of time.

In the present example, the motor speed 501 may be measured after the period of time has elapsed, at the 'soft start' time. The soft start time may be period of time after the activation of the power tool at which the power tool would be expected to reach the motor operating speed under normal conditions. The soft start time may be predetermined. The control logic may be configured to measure the motor speed 501 when the soft start time elapses so as to determine whether the motor speed exceeds the speed threshold 511. If the motor speed does not exceed the speed threshold, the control logic may cause the power tool to activate power limitation mode 507. The predetermined soft start time may be chosen so as to be long enough to allow the motor operating under normal conditions to increase its speed above the speed threshold - and preferably long enough to allow the motor operating under normal conditions sufficient time to achieve its steady state speed. The soft start time may additionally or alternatively be chosen such that it is short enough to catch a power spike early before excess power risks causing damage to the power tool and/or before the power reaches a safety shutdown limit 406.

In some examples, the soft start time may be in the range of substantially 2 to 6 seconds. In the example of a plate compactor, it may be preferable to choose a soft start time of 3 seconds. The soft start time may be selected in dependence upon the length of startup procedure for the power tool.

In an example, the control logic may activate the power limitation mode when the power tool is in an operating mode (e.g. where the motor is operating at a steady-state operating speed). A condition for activating the power limitation mode may be, for example, a motor speed being below a speed threshold, a measure of electrical power and/or current drawn from the power source being above a respective threshold, a measure of electrical power and/or current provided to the motor being above a respective threshold, a measure of mechanical power generated by the motor being above a respective threshold, a period of time being above a respective threshold.

For example, the control logic may activate the power limitation mode if the motor speed drops below the speed threshold for a predetermined period of time. The predetermined period of time may be empirically generated in dependence on the power tool being used, the period of time varying for different tools and different applications. For example, the predetermined period of time may be different depending upon whether the power limitation mode is being activated from the startup mode or whether the power limitation mode is being activated from the operating mode. The predetermined period of time for a plate compactor may be, for example, 2 to 6 seconds, preferably 3 seconds.

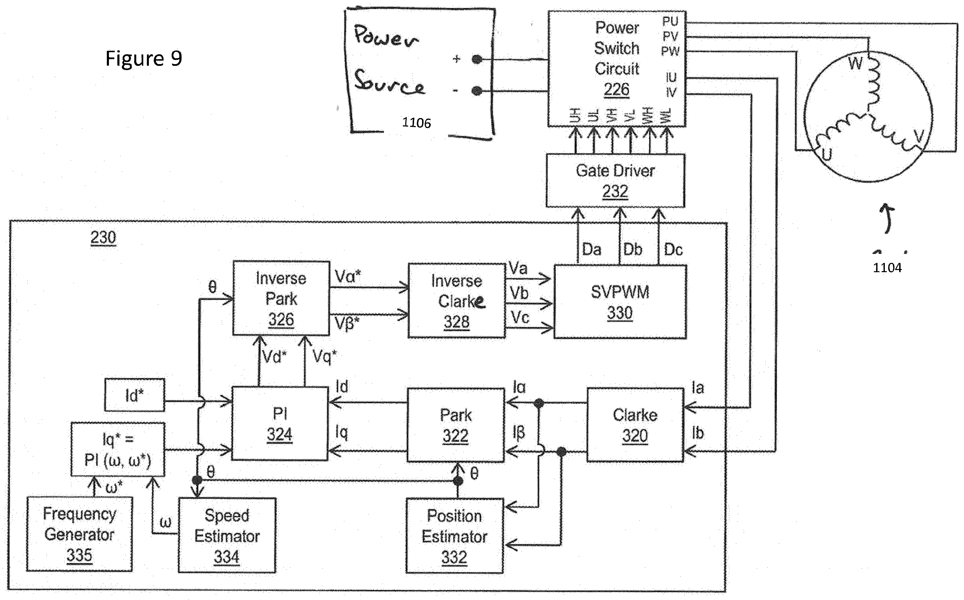

The measurement of the motor speed may be determined by the control logic 230. The control logic 230 may comprise a speed estimator 334 as shown in Figure 9. Although this example refers to a control logic configured for a FOC commutation scheme, a suitable speed estimator may be present in combination with any commutation scheme.

At method step S03 of Figure 8, if the motor speed 501 is measured to be above the speed threshold 511 at the soft start time, then the control logic will not activate the power limitation mode 507. Instead, the power tool will remain in the startup mode 505 until the motor speed 501 reaches the motor operating speed (shown in method step S10), with the method then skipping straight to method step S09, at which point both the motor power 503 and the motor speed 501 will be at their steady state values, and the control logic will activate the operating mode 509.

However, if the motor speed 501 is below the speed threshold 511, then the control logic will activate the power limitation mode 507 and the method will move from method step S03 to step S04.

When the power tool is operating in the power limitation mode 507, the input power 503 may be continuously monitored, corresponding to method step S05. The input power 503 can be monitored so that the control logic 230 may keep the motor around a predefined power limit 513, corresponding to method step S06. The predefined power limit is preferably lower than a safety shutdown limit 406. The power limit may be fixed. The predefined power limit 513 is shown at 0.6 kW merely as an example, and the particular power limit selected will typically depend on the type of power tool and its characteristics. For example, a plate compactor may operate with a power limit typically around 1.6 kW.

By holding the input power of the motor at a power limit, the motion of the moving parts of the power tool may overcome the additional load so as to cause the load on the power tool to reduce towards a typical level. For example, when the additional load is due to increased lubricant viscosity, as the power tool is operated the viscosity of its lubricants may reduce and approach more typical values. This may cause the load on the motor to no longer be substantially above its typical value for a given motor speed and mechanical load to which the motor is applied. The reduction in lubricant viscosity could be due to, for example, the temperature of the lubricants increasing due to friction and/or heat generated by the motor and/or battery, and/or the effect of shear forces on the lubricants during motion. In some examples, the reduction in load may be due to, for example, contaminants such as mud and/or ice around the moving parts of the tool being overcome.

In the power limitation mode, the electrical input power 503 to the motor is calculated. The electrical input power to the motor may be referred to as the active power. The active power may be an instantaneous power or a power averaged over a predefined period of time. The time over which the power is averaged may be dependent upon, for example, the type of power tool being used, the type of electric motor, gears, and transmission being used. In the example of a plate compactor, the power may be calculated every 10ms. The power may be calculated as an average of the power over the time interval, in this example 10ms. The time interval over which the power is averaged may be greater than or less than the interval between measurements. The calculated power values may be filtered with a first order filter. The active power 503 may be calculated in a manner appropriate to the commutation scheme used in the motor, e.g. trapezoidal, FOC, etc., as discussed elsewhere herein.

The active power may then be continuously compared to the predefined power limit 513. The comparison may be performed at the power limitation unit (PLU) 362 or at another module suitable for comparing values.

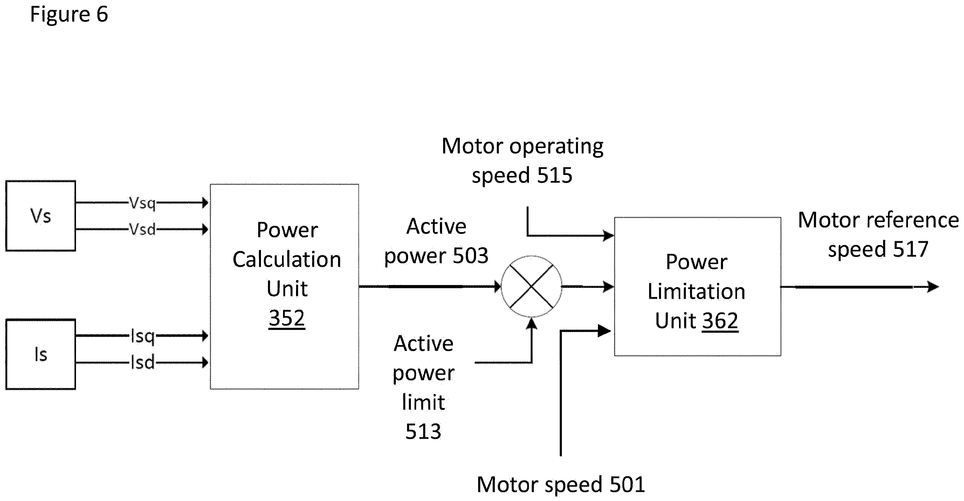

One example of how the power limitation mode operates is described with reference to Figure 6, depicting the flow of data between some components of the control apparatus 350. In this example, the speed of the motor is varied in response to determining whether the active power is greater than or less than the power limit so as to maintain the power substantially at the power limit (within any applicable hysteresis bounds).

The PLU 362 may be configured to take the motor speed 501 and/or steady state operating speed 515 as inputs. The PLU 362 may also take the active power 503 and/or active power limit 513 as inputs. In the example of figure 6, the difference between the active power 503 and the active power 513 is input to PLU 362.

When the power limitation mode is activated, the control logic may adjust one or more motor control parameters so as to maintain power at or close to the power limit - e.g. by controlling the speed at which the motor operates. The motor control parameters that may be adjusted may include, for example, the voltage provided to the motor, the current provided to the motor, the frequency of an alternating current provided to the motor, and/or the phase of an alternating current provided to the motor. The control logic may adjust the one or more motor control parameters to control the speed such that the speed matches the reference motor speed. In the present example, the motor reference speed 517 may be set to approximately the motor speed measured when the power limitation mode is triggered (e.g. due to one or more predetermined conditions being met). When this happens, the control logic 230 may vary at least the voltage, current, frequency, and/or the phase of the alternating current provided to the motor of the motor such that the motor approximately maintains the speed it was operating at the point of activation of the power limitation mode.

As the motor continues to operate (staying within the power limit), the additional load on the motor may start to decrease. This may be, in the case that the additional load is due to cold lubricant for example, due to frictional forces raising the temperature of the lubricant. As the lubricant viscosity decreases, the required torque decreases, leading to a decrease in power for a given motor speed. Therefore, the control logic may be able to increase the motor speed in order to keep the motor power approximately at its power limit.

If the active power is determined to be above the power limit, then the PLU 362 may determine a new motor reference speed that is less than the current motor speed 501. The motor reference speed may be calculated by decreasing the motor speed by a predefined speed step. The speed step may be an absolute value or a relative value. The speed step may be in the range of 0.5 - 2.5% of the operating motor speed 515, preferably 1.5%.

If the active power is determined to be below the power limit, then the PLU 362 may determine a new motor reference speed that is greater than the current motor speed 501. The motor reference speed may be calculated by increasing the motor speed by a predefined speed step, which may be the same as the speed step used for decreasing the motor speed. The speed step may be an absolute value or a relative value. The speed step may be in the range of 0.5 - 2.5% of the operating motor speed 515, preferably 1.5%.

The dashed-and-dotted line representing the reference speed 517 on Figure 5 is shown as being higher than the actual motor speed 501 - this is is merely to increase the legibility of the figure and in fact the motor reference speed 517 may be equal or substantially equal to the motor speed 501.

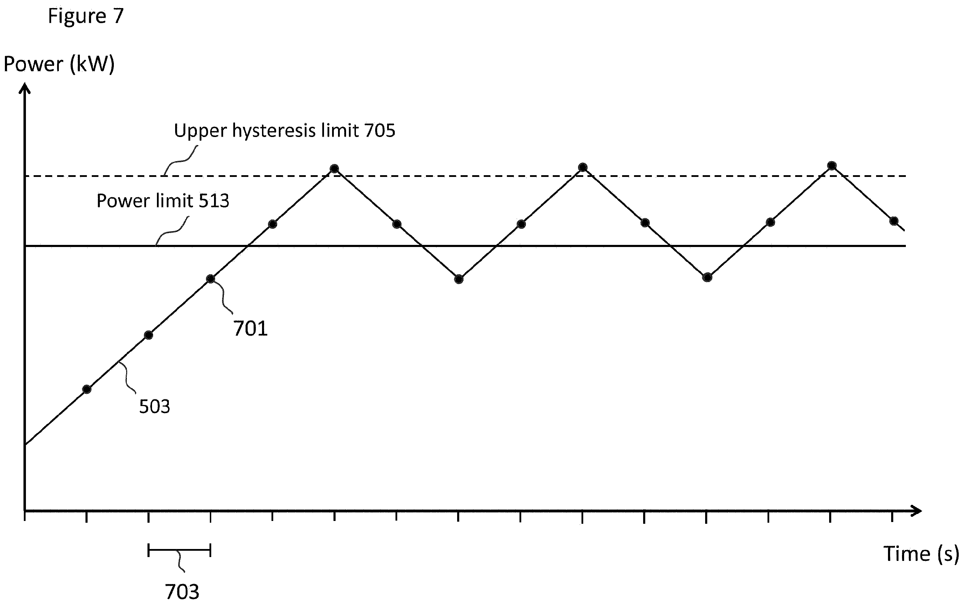

Figure 7 shows a plot of the power of the motor over time, where measurements 701 of the power of the motor are made at every measurement interval 703. The measurement interval 703 may vary in dependence on the power tool being used. For a plate compactor, the measurement interval may be, for example, in the range of 5ms to 20ms, preferably 10ms. The measured power values may be filtered with a first-order filter. In order to prevent oscillation of the reference motor speed when the power is at the power limit, it can be advantageous to define one or more hysteresis bounds on the power limit 513.

A simple example of an upper hysteresis bound on the power limit is illustrated in Figure 7. The control logic 230 increases the power to the motor until the upper hysteresis bound 705 on the power limit is reached. When the power is above the upper hysteresis bound, the control logic operating in accordance with the methods described herein, may reduce the power to the motor by reducing the reference motor speed. The motor speed is reduced until the power has fallen below the power limit 513. The control logic may then increase the motor speed so as to increase the power until the power again reaches the hysteresis bound 705, as illustrated in Figure 7. The change of motor power is shown increasing and decreasing linearly in Figure 7, but in general the changes in motor power may not be linear. The hysteresis value of the power limit may be in the range of 2% to 4% of the power limit 513, and preferably 3%.

The PLU 362 may set the motor speed 501 to the new motor reference speed 517. This process may be iterated, with the motor speed being periodically compared to the speed threshold value 511. If the motor speed is still lower than the speed threshold value 511, then the motor remains in the power limitation mode.

To deactivate the power limitation mode 507, the motor speed 501 may be required to reach the speed threshold value 511, as shown in method step S07. Once this condition has been satisfied, method moves to step S08, the power limitation mode is deactivated, and the control logic activates its steady state operating mode 509. In method step S09, when the power tool is in the operating mode, the motor reference speed 517 may be set to the steady state motor operating speed 515.

In some examples, the power limitation mode 507 may be deactivated when a 'time out' interval is exceeded (e.g. since the power tool was activated/startup mode was activated/power limitation mode was activated) and the motor speed has not reached its speed threshold value. This avoids maintaining the power tool in the power limitation mode indefinitely when the additional load issue is not resolving through operation of the power tool. If the motor speed has not reached the speed threshold value within the time out interval, it is likely that the power tool will need attention from the user - e.g. it may be need servicing, it may have a mechanical issue, and/or there may be material adhered to the power tool which needs to be manually removed before it can be used. Suitable values for the time out interval may vary according to the power tool being used. For example, the time out values for a plate compactor may be between 1 minute and 5 minutes, and preferably around 2 minutes. On deactivating the power limitation mode, the power tool is preferably configured to shut down but may in some examples be configured to activate the operating mode whilst indicating to a user that there is an issue.

There may be provided a user interface (e.g. at input unit 1140) configured to provide information on the power tool's operation to the user. The user interface may include an indicator when the power tool is in its power limitation mode.

The user interface may comprise one or more controls for controlling the motor operating speed 515 - e.g. to select between high and low motor speeds, which may correspond to high and low powers. The user may select between a plurality of speed options, e.g. more than two. One or more indicators may be provided to indicate the selected speed option - e.g. LEDs may be provided to indicate whether the power tool is operating at high or low speed. In some examples, the low speed indicator may be used to indicate whether the power tool is currently in the power limitation mode 507. For example, the brightness of the low speed indicator may be periodically varied (e.g. fading the light up and down) at a frequency commensurate with the proportion of the steady state motor operating speed at which the motor is operating. For example, the frequency of the periodic brightness variation may be low when the motor speed is low, with the frequency increasing as the motor speed increases. Once the motor speed has reached the motor operating speed and the power tool is no longer in its power limitation mode, the low speed indicator may remain steady (e.g. at a constant brightness). Once the power tool is operating in its low speed mode, the user may be able to select a higher speed operating mode.

### Commutation control schemes

The power limitation algorithm described herein may be used with any commutation control scheme for driving the motor. In some examples, control logic 230 controls commutation of the motor 16 using a vector control technique referred to as field-oriented control (FOC). FOC is a variable-frequency drive control algorithm that provides several advantages over conventional trapezoidal control or voltage-over-frequency (V/Hz) control schemes often used in power tools having brushless motors.

Trapezoidal 6-step commutation control is simple to implement and execute and is therefore a popular option. However, this control scheme can generate high torque ripple, particularly at low speed, which can lead to high vibration and motor noise. One advantage to using this commutation scheme is that the active power can be calculated simply by multiplying the current by the voltage.

Voltage-over-frequency (V/Hz) control, also known as sinusoidal control, may also be implemented in power tool motor control systems. V/Hz control is a scalar control scheme where a ratio of voltage and frequency is held constant as motor speed (i.e., Hz) changes. This scheme overcomes the torque-ripple issues seen in trapezoidal control by supplying smoothly-varying sinusoidal currents to the motor phases. However, in high-speed operations, where the frequency of motor rotation increases, it becomes more challenging to maintain the desired voltage and current using this scheme.

A V/Hz control scheme is typically performed in open loop with respect to current. V/Hz control effectively provides a given three-phase sinusoidal voltage pattern base on rotor position, where the voltage amplitude is controlled based on motor speed so as to maintain a constant V/Hz ratio. A Proportional Integral (PI) controller may be provided to reduce motor speed when the current exceeds a current limit, but current and torque is otherwise not well controlled.

FOC is different from sinusoidal control in that a current loop is provided using measured motor currents and without reference to the motor's rotation. FOC thus offers more precise torque and speed control over the complete range of motor operation. Particularly, FOC offers better efficiency for high speed operations as well as operating involving dynamic load changes than V/Hz control.

FOC may be performed using sensors or may be performed without using sensors to measure the position of the rotor. When performed without using sensors, the commutation scheme may be referred to as sensorless field-oriented control (SFOC).

In FOC, the three phase currents of the stator are measured and converted to two orthogonal components that can be combined in a vector. The first component, known as direct current *I_{d}*, is the magnetic flux of the motor induced in the stator windings due to rotation of the rotor within the stator. This component runs parallel to the pole axis of the rotor and does not apply a rotational force on the rotor. The second component, known as quadrature current *I_{q},* is proportional to the motor torque. This component runs perpendicular to the pole axis of the rotor and applies force generating rotational torque. These two components may be controlled independently by the control logic.

The *I_{d}* current is typically desired to be 0 to minimize the unwanted direct torque component contributing to current losses for a given motor operating point. The level of the *I_{q}* current may be varied to achieve the desired torque. Since the two orthogonal components are defined in the rotating reference frame of the motor, the control logic is able to control the currents irrespective of motor speed. By controlling these two currents, the motor torque and speed can be directly controlled.

### Field-Oriented Control (FOC)

In some examples, the control logic is configured to perform commutation of BLDC motor 1104 according to Field-Oriented Control (FOC). The use of FOC algorithms will now be described with reference to the block system diagram of Figure 9 which shows an exemplary configuration of control logic 230. The control logic 230 is configured to calculate the angular position of the rotor by analysing phase current signals from the motor provided by current sensor 356. Control logic 230 may utilise different FOC algorithms (e.g. IPD, HFI, SMO) to perform position detection depending on the speed of the motor. IPD stands for Initial Position Detection, HFI stands for High Frequency Injection and SMO stands for Sliding Mode Observer. The details of these FOC algorithms are beyond the scope of this application and will be appreciated by the skilled person.

In the example shown in Figure 9, the current sensor is provided at the power switch circuit 226 such that the power switch circuit provides two of the stator phase currents, IU and IV. The control logic 230 receives the two phase currents as currents *Ia* and *Ib* and may calculate the third phase current *Ic* using Kirchoff's current relation, *Ia + Ib* + *Ic* = 0, where *Ia*, *Ib,* and *Ic* are the three phase currents. The control logic 230 includes a Clarke transformation unit 320 that converts the three phase currents, which are typically sinusoidal, into a 2-axis coordinate system in the fixed frame of reference. The Clarke transformation unit 320 produces two signals *Iα* and *Iβ,* which are two (typically sinusoidal) waveforms that are 90 degrees apart in phase.

Components of the 2-axis coordinate system of the stator currents are time varying and difficult to process using traditional Proportional Integral (PI) processes. Thus, it can be advantageous for the control logic 230 to include a Park transformation unit 322 that converts the two-axis system from a fixed reference to a rotating reference frame that is synchronous with the rotor flux. Park transformation unit 322 uses a rotor position signal *θ* (e.g. from a position sensor 360 or derived in the manner described below) to convert *Iα* and *Iβ* to DC waveforms *Id* and *Iq,* where *Id* and *Iq* are the in-phase and quadrature components of the stator currents, respectively. As described above, the *Id* current is aligned with the rotor flux, whereas the *Iq* current is orthogonal to the rotor flux and is therefore responsible for torque generation.

Control logic 230 may include a position estimator 332 that calculates (estimates) the rotor orientation *θ* using the motor current signals *Iα* and *Iβ.* This can be useful if the motor does not include a position sensor 360.

The control logic 230 may include a speed estimator 334 that calculates (estimates) motor speed *ω* based on the rate of rotor position change in the rotor positional signal *θ*.

The control logic 230 may include a PI (Proportional-Integral) loop controller 324 that compares the corresponding axis vectors with reference currents *Id** and *Iq** (e.g. set by the control logic according to the reference motor speed) and determines *Id* error correction signals to generate DC drive voltage signals *Vd** and *Vq** accordingly. The *Id** reference controls the rotor magnetization flux. The *Iq** reference controls the torque output of the motor. Since *Iq* generates motor torque and *Id* does not, it can be advantageous to set the *Id** reference to 0 and *Iq** to a target value. The obtained DC drive voltage signal *Vq** corresponds to the amount of voltage correction that is needed to produce a current *Iq** so as to generate the torque required to drive the motor at the desired (reference) speed (e.g. as set in accordance with the power limitation algorithm described above).

A frequency generator 335 may be provided to generate a motor reference speed signal *ω** as a function of the motor reference speed of the motor. The motor reference speed of the motor may be received from the PLU 362. In some examples, *Iq** is calculated as a PI function of the calculated motor speed *ω* and the motor speed reference signal *ω**. This may provide the *Iq** required to result in a desired change of speed to maintain the motor speed at the motor reference speed.

Since the DC drive voltage signals *Vd** and *Vq** are defined in a rotating reference frame, the control logic 230 may include an inverse Park transformation unit 326 that converts the DC drive voltage signals *Vd** and *Vq** signals back to fixed reference frame drive voltages *Vα** and *Vβ*.* Control logic 230 may also include an inverse Clarke transformation unit 328 that converts the fixed reference frame drive voltage signals *Vα** and *Vβ** from the fixed 2-axis coordinate system back into the 3-axis coordinate system defined for the three motor phase voltage signals *Va, Vb,* and *Vc.*

In some examples, the control logic 230 may include a Space Vector Pulse Width Modulation (SVPWM) unit 330, which receives the three phase voltage signals *Va, Vb,* and *Vc* and generates drive signals *Da, Db* and *Dc* for controlling the switching operation of the power switch circuit 226 accordingly. SVPWM unit 330 is configured to control the duty cycles of the drive signals *Dc, Db* and *Dc* in such a way that the power switch circuit 226 outputs a substantially sinusoidal phase voltage waveform on each of the phase lines *Pu, Pv,* and *Pw* of the motor 1104. These sinusoidal phase voltage waveforms are 120 degrees apart and correspond to the three motor phase voltage signals *Va, Vb,* and *Vc.*

In some examples, the drive signals *Da, Db* and *Dc* may be received at a gate driver 232 comprising circuitry configured to generate output drive voltage signals UH, VH, WH, UL, VL, and WL at voltage levels suitable to drive the gates of semiconductor switches (e.g. field-effect transistors or FETs) within the power switch circuit 226. By controlling a PWM switching operation of semiconductor switches at the power switch circuit 226 by means of the drive signals, control logic 230 can therefore control the direction and speed at which the motor windings are sequentially energized, thus electronically controlling the motor commutation.

The details of SVPWM modulation are beyond the scope of this disclosure and will be known by persons skilled in the art of motor control.

In an embodiment, control logic 230 used for FOC execution and rotor position detection is a 32-bit processor employing an ARM Cortex-M0+ processor core. A Cortex-M0+ processor core includes a two-stage pipeline architecture and is therefore cheaper and consumes less power than other ARM Cortex-M processors. Based on conventional wisdom, Cortex-M0+ processors are considered too slow to handle the processing power requires for FOC execution and rotor position detection, particularly in high-speed and/or high-torque motor control applications where the rotor angle can change very quickly in an unexpected manner. However, in an embodiment, by removing the Hardware Abstraction Layer (HAL) of the processor core, which provides a programming interface that allows the processor to interact with hardware resources, and customizing the related registers accordingly, Cortex-M0+ processors can be used to implement the techniques described above for power tool applications. It should be noted, however, that more powerful processors, e.g. Cortex-M1, Cortex-M2, etc. may be alternatively utilized.

The motor control apparatus, control logic and power switch circuit of Figures 3, 6, 9 are shown as comprising a number of functional blocks. This is schematic only and is not intended to define a strict division between different logic elements of such entities. Each functional block may be provided in any suitable manner.

Generally, any of the functions, methods, techniques or components described above can be implemented in software, firmware, hardware, or any combination thereof. The terms "module," "functionality," "component", "element", "unit", "block" and "logic" may be used herein to generally represent software, firmware, hardware, or any combination thereof. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method for controlling an electric motor configured to drive a mechanical load, the method being for use in a power tool and comprising:
in response to a condition being satisfied, comparing speed of the motor to a speed threshold; and
if the motor speed is below the speed threshold, activating a power limitation mode comprising:
monitoring motor power;
adjusting one or more motor control parameters so as to maintain power at or close to a power limit; and
in response to a determination that the motor speed exceeds the speed threshold, deactivating the power limitation mode and activating an operating mode in which a reference motor speed for the motor is set to an operating speed.

2. The method of claim 1, wherein the electric motor is configured to drive the mechanical load in a reciprocating or oscillating cycle.

3. The method of any preceding claim, wherein the operating speed is a steady state speed of the power tool.

4. The method of any preceding claim, wherein the condition is one or more of: a predetermined period of time elapsing since activation of the motor; a motor power reaching a power threshold; or a motor current reaching a current threshold.

5. The method of claim 4, wherein the motor power reaching the power threshold is one or more of: a power drawn from a power source; a power provided to the motor; or a mechanical power generated by the motor.

6. The method of claim 4, wherein the motor current reaching the current threshold is one or more of: a current drawn from a power source; a current provided to the motor.

7. The method of any preceding claim, further comprising, prior to testing the condition, activating the electric motor in a startup mode.

8. The method of any claim 7, further comprising setting the reference motor speed according to a predetermined startup procedure upon activation of the startup mode.

9. The method of any preceding claim, wherein the speed threshold is in the range of 50% to 80% of the operating speed, and preferably, the speed threshold is about 65% of the operating speed.

10. The method of any preceding claim, further comprising setting the reference motor speed to the motor speed upon activation of the power limitation mode.

11. The method of any preceding claim, wherein the adjusting one or more motor control parameters so as to maintain power at or close to a power limit comprises:
decreasing the reference motor speed by a predetermined speed step if the monitored motor power exceeds the power limit; or
increasing the reference motor speed by a predetermined speed step if the monitored motor power is below the power limit; or
maintaining the reference motor speed if the monitored motor power is at the power limit.

12. The method of any preceding claim, wherein the adjusting one or more motor control parameters so as to maintain power at or close to a power limit comprises:
decreasing the reference motor speed by a predetermined speed step if the monitored motor power exceeds the power limit by a hysteresis value; or
increasing the reference motor speed by a predetermined speed step if the monitored motor power is below the power limit by a hysteresis value.

13. The method of any preceding claim, wherein the variation of the one or more motor control parameters causes the motor speed to match the reference speed.

14. The method of any preceding claim, further comprising, if the power limitation mode is active for longer than a predetermined timeout period:
deactivating the power limitation mode; and/or
powering down the power tool.

15. A power tool comprising:
an electric motor configured to drive a mechanical load; and
control logic configured to:
in response to a condition being satisfied, compare speed of the motor to a speed threshold; and
if the motor speed is below the speed threshold, activate a power limitation mode in which the control logic is configured to:
monitor motor power;
adjust one or more motor control parameters so as to maintain power at or close to a power limit; and
in response to a determination that the motor speed exceeds the speed threshold, deactivate the power limitation mode and activate an operating mode in which a reference motor speed for the motor is set to an operating speed.
